# EUROPEAN PATENT SPECIFICATION

(11) **EP 2 217 532 B1**
(45) Date of publication and mention of the grant of the patent: **08.06.2011**
(21) Application number: 08849795.3
(22) Date of filing: 04.11.2008
(51) Int. Cl.: C01G 23/07

(54) **PROCESS FOR THE MANUFACTURE OF RUTILE TITANIUM DIOXIDE POWDERS**
VERFAHREN ZUR HERSTELLUNG VON RUTILTITANDIOXIDPULVER
PROCÉDÉ DE FABRICATION DE POUDRES À BASE DE DIOXYDE DE TITANE RUTILE

(30) Priority: 15.11.2007 EP 07022167; 20.11.2007 US 996481 P
(43) Date of publication of application: 18.08.2010
(73) Proprietor: Umicore, 1000 Bruxelles (BE)
(72) Inventor: PUT, Stijn, B-2300 Turnhout (BE); VAN ROMPAEY, Yves, B-2260 Westerlo (BE)
(74) Representative: Pilate, André
(86) International application number: PCT/EP2008/009261
(87) International publication number: WO 2009/062608

(56) References cited:
- EP-A- 0 340 907
- US-A- 3 661 523
- US-B1- 6 387 531
- ISHIGAKI, TAKAMASA ET AL: "Phase formation and microstructure of titanium oxides and composites produced by thermal plasma oxidation of titanium carbide" JOURNAL OF THE AMERICAN CERAMIC SOCIETY , 86(9), 1456-1463 CODEN: JACTAW; ISSN: 0002-7820, 2003, XP002479492
- OH, SEUNG-MIN ET AL: "Nanocrystalline TiO2 powders synthesized by in-flight oxidation of TiN in thermal plasma: mechanisms of phase selection and particle morphology evolution" JOURNAL OF MATERIALS RESEARCH , 20(2), 529-537 CODEN: JMREEE; ISSN: 0884-2914, 2005, XP002479493

## Description

This invention pertains to processes for producing ultra-fine rutile titanium dioxide powders.

Titanium dioxide is capable of crystallizing into three different forms, namely anatase, rutile and brookite. Methods of making ultra-fine titanium dioxide powders include gas phase synthesis, colloidal precipitation and mechanical grinding. Important challenges to face are control of the crystal phase, the particle size and distribution, the degree of agglomeration and aggregation of the particles, and the degree of doping.

During gas phase synthesis, the particle size and distribution of TiO₂ can be controlled by rapid quench methods as explained in US-5935293 and US-5851507, or by using low flame temperatures and short residence times as shown in US-5698177 and by Akhtar et al., Dopants in Vapor-phase synthesis of titania, J. Am. Ceram. Soc. 75[12], 3408-16, 1992. EP-1514846 describes a method for eliminating over-sized particles in the vapour phase synthesis of metal oxide-containing particles, comprising reacting oxygen with one of more vapour streams comprising a titanium halide, a silicon halide, and a compound selected from the group consisting of phosphorus, germanium, boron, tin, niobium, chromium, silver, gold, palladium, aluminium, and mixtures thereof.

Other methods are related to control of the crystal structure of TiO₂, either anatase or rutile. The most obvious method of making rutile TiO₂ powder is by calcination of anatase at temperatures of at least 900 °C. However, such high temperatures will cause an undesired sacrifice in particle size and particle size distribution because of sintering and aggregation of the particles. Alternatively, rutile-promoting additives can be added. In GB-1031647, US-2559638 and US-3214284, aluminium trichloride is added to titanium tetrachloride as rutile promoting additive, thereby achieving a rutile yield of more than 99 %. This same result is reported to occur when zirconium or zinc compounds are added. US-5536487 describes the manufacture of titanium dioxide by the chloride process, into which aluminium trichloride and one or more particle size control compounds are added. In EP-1138632, it is found that the photocatalytic activity of titanium dioxides in optionally acidified aqueous suspension can be either increased or reduced by doping with oxides of (noble) metals or metalloids. Moreover, a change in the amount of doping component leads to a change in the rate of photocatalytic degradation. However, undoped rutile TiO₂ powders can not be produced by these methods.

Rutile TiO₂ powders are used in UV blocking compositions, e.g. in paints, plastics, coatings, pigments and sunscreens. Titanium dioxide absorbs UV light efficiently, but it also tends to catalyse the formation of super-oxide and hydroxyl radicals, which may initiate unwanted oxidation reactions. Such photo-oxidations may explain the ability of illuminated titanium dioxide to degrade organic matter. As titanium dioxide, when present in sunscreens, may enter human cells, the ability of illuminated titanium dioxide to cause DNA damage has also been a matter of investigations. EP-1079796 provides UV screening compositions that address the above problem, by incorporating manganese or chromium in a rutile titanium dioxide host lattice. Unfortunately, neither manganese nor chromium are effective rutile-promoting additives.

The present invention provides a method of producing ultra-fine titanium dioxide powders. A rutile yield above 50 %, above 90, or even above 99 % can be obtained. The reaction scheme allows producing powders with or without doping elements. Typically, particles with an average primary particle size between 1 and 100 nm can be made by the process of this invention. Accordingly, a new process for the production of rutile TiO₂ powder is divulged, comprising the steps of providing a hot gas stream and of introducing therein, firstly:
- a titanium-bearing first reactant; and
- a carbon- and/or nitrogen-bearing second reactant;
   the temperature of said gas stream being chosen so as to vaporize said first and second reactants, the reactants being selected so as to form, at the prevalent temperature, titanium carbide, titanium nitride or a mixture thereof, as a nano-sized precursor; and, thereafter:
- a volatile oxygen-bearing reactant selected so as to react with the nano-sized precursor, converting it to nano-sized titanium dioxide powder having a rutile content of at least 50 %.

This latter reaction is assumed to be heterogeneous, the carbide and/or nitride particles from the first step being converted to oxide by the volatile (i.e. gaseous at the prevalent temperature) reactant in the second step, while remaining in the solid state. It is believed that, due to the cubic crystal structure of the carbide and/or nitride precursor, the formation of rutile is strongly promoted compared to the formation of anatase during subsequent oxidation.

The initial gas stream temperature is chosen so as to preferably result, after introduction of the reactants, in a gas stream above 1000 K. This is to ensure adequate reaction kinetics for the formation of the carbide and/or nitride precursor. However, if oxygen and carbon are present, originating from the gas stream itself or from the first and second reactants, a Carbon/O₂ ratio of at least 0.5, and a temperature above 1800 K are preferred. Otherwise, undesired anatase TiO₂ may form irreversibly in this step. By Carbon/O₂ ratio is meant: the molar ratio of the total amount of carbon to the total amount of oxygen (expressed as O₂) in all species present in the gas stream in the first process step.

Once the precursor is formed, and if the gas temperature is higher than about 2000 K, it is advisable to quench the gas stream to below 2000 K. This is to avoid grain-growth of the carbide/nitride particles, and also to avoid melting the TiO₂ when it is synthesised in the second process step. Such a particle meltdown might indeed interfere with the rutile-promoting effect of the precursor.

It is also advisable to quench the gas stream after the step of introducing an oxygen-bearing reactant. A temperature down to 600 K is preferred, to avoid grain-growth of rutile in the second step.

The hot gas stream may advantageously be generated by means of either one of a gas burner, a hot-wall reactor, an RF plasma, and a DC arc plasma.

Preferred titanium-bearing first reactants comprise either one or more of titanium chloride, oxide, sulphate, and organo-metallic compounds.

Preferred carbon- and/or nitrogen-bearing second reactants comprise either one or more of carbon, carbonate, carbon monoxide, carbon dioxide, hydro-carbons, nitrogen, amines, and nitrous oxide.

Preferred oxygen-bearing reactants comprise air, oxygen, carbon dioxide, and nitric oxide.

It can be advantageous to introduce both the first and the second reactants simultaneously in the hot gas stream.

In a particularly advantageous embodiment, the titanium-bearing first reactant and the carbon- and/or nitrogen-bearing second reactant are actually a single compound that will vaporize and form the needed nano-sized precursor upon heating. Such a single compound is e.g. titanium isopropoxide.

The oxygen-bearing reactant could advantageously be air.

Another embodiment of the process concerns the synthesis of metal-doped rutile. To this end, an additional metal-bearing compound, which has to be volatile at the prevalent reaction temperature of the first step, is introduced in the hot gas stream, together with the firstly introduced reactants. This metal-bearing compound preferably contains manganese, more preferably as an organic compound. In this case, the amount of the manganese-bearing compound is preferably adjusted so as to obtain a doping level of between 0.01 and 30 wt% in the rutile.

The invention is further illustrated by the following examples. Table 1 summarizes the results obtained when using an inductively coupled plasma torch as a hot gas generator.

### Example 1

A 25 kW radio frequency (RF) inductively coupled plasma (ICP) is used, using an argon/nitrogen plasma with 12 Nm³/h argon and 3 Nm³/h nitrogen gas. Titanium isopropoxide is injected in the plasma at a rate of 1 1/h, resulting in a prevalent (i.e. in the reaction zone) temperature above 2000 K in this first process step, wherein the titanium isopropoxide is totally vaporized, whereupon it readily nucleates, forming a cubic TiC nano-powder. A nitrogen flow of 5 Nm³/h is used as quench gas immediately downstream of the reaction zone. This lowers the temperature of the gas to below 2000 K. Further downstream, 10 Nm³/h of air is blown into the gas stream, thereby triggering the second process step whereby the TiC powder is oxidized to nano-sized rutile TiO₂. Any residual carbon is also oxidised in this step. After filtering, nano-sized TiO₂ powder is obtained, having a rutile content of 97 ±. 2 % and a specific surface area of 25 ± 2 m²/g. This corresponds with a mean primary particle size of about 60 nm.

### Example 2

The apparatus according to Example 1 is operated in similar conditions. However, along with titanium isopropoxide, manganese iso-octoate is injected in the plasma, at a total injection rate of 1 1/h. After filtering, nano-sized manganese doped TiO₂ powder is obtained, having a rutile content of 97 ± 2 %, a specific surface area of 25 ± 2 m²/g, and a Mn content of 0.67 ± 0.02 %.

### Example 3

A 250 kW direct current (DC) plasma torch is used, with nitrogen as plasma gas. The gasses exit the plasma at a rate of 150 Nm³/h. A mixture of titanium isopropoxide and manganese iso-octoate is injected downstream of the plasma, at a rate of 25 kg/h. In this step, the reactants are vaporised, resulting in a prevalent gas temperature of 2200 K, and nucleate as a Mn-doped TiC powder. Subsequently, a nitrogen gas flow of 160 Nm³/h is applied in order to reduce the gas temperature. Further downstream, air is blown at a flow rate of 6000 Nm³/h, thereby oxidizing the TiC into nano-sized rutile TiO₂. After filtering, doped nano-powder is obtained, with a rutile content of 97 ± 2 %, a Mn content of 0.67 ± 0.02 %, and a specific surface area of 18 ± 2 m²/g, which corresponds with a mean primary particle size of about 80 nm.

### Example 4

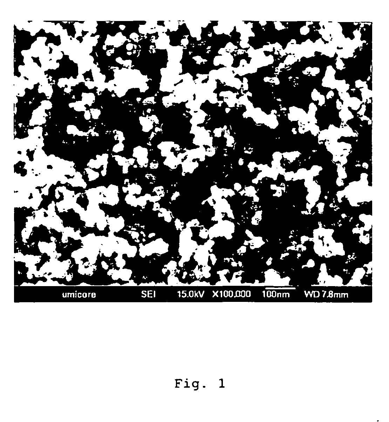

This example is similar to Example 3. However, the mixture titanium isopropoxide and manganese iso-octoate reactants is injected at a much higher rate, namely at 100 kg/h. this results in a prevalent temperature of 1100 K only. Subsequently, a nitrogen gas flow of 200 Nm³/h is applied in order to reduce the gas temperature. Further downstream, air is blown at a flow rate of 15000 Nm³/h. After filtering, doped nano-powder is obtained, with a rutile content of 99 ± 1 %, a Mn content of 0.67 ± 0.02 %, and a specific surface area of 25 ± 2 m²/g. An FEG-SEM micrograph of the particles is shown in Fig. 1, illustrating doped nano-sized TiO₂ powder with an average primary particle size below 100 nm. This example shows that a relatively low reaction temperature in the first process step, down to about 1000 K, does not impair the rutile yield.

### Example 5

A 50 kW RF ICP is used, using a plasma with 12 Nm³/h argon and 3 Nm³/h nitrogen gas. Titanium isopropoxide is injected in the plasma at rate of 500 ml/h, resulting in a prevalent temperature above 3000 K. As described above, titanium isopropoxide is totally vaporized, whereupon TiC is formed. Subsequently, a nitrogen flow of 5 Nm³/h is used as quench gas. In this case, the obtained powder is not further oxidised. After filtering, nano-sized TiC powder is obtained, having a specific surface area of 40 ± 4 m²/g. This result appears to validate the mechanism described in this invention, namely the formation of an intermediate carbide (in this example).

### Example 6

This example is similar to Example 1. However, titanium isopropoxide is injected in the plasma at a rate of 500 ml/h only. After filtering, nano-sized TiO₂ powder is obtained, having a rutile content of 97 ± 2 % and a specific surface area of 22 ± 2 m²/g. No critical dependency of the reactant flow rate is thus observed.

### Examples 7 - 9 and comparative Example 10

These examples are similar to Example 1. However, variable oxygen flow rates of respectively 0.2, 0.5, 1 and 3 Nm³/h are injected in the plasma, together with argon or argon/nitrogen. All obtained powders reveal specific surface in the range of 20 to 25 m²/g. At Carbon/O₂ ratios of respectively 2.2, 0.9, 0.45 and 0.15, the rutile yield is, respectively, 95, 90, 50 and 35 %. At Carbon/O₂ ratios above 0.5, adequate rutile contents, i.e. of more than 50 %, are obtained. However, in the latter case (comparative Example 10, Carbon/O₂ of 0.15), most carbon gets oxidised in the plasma, leaving an insufficient amount of free carbon for the synthesis of the required TiC intermediate. Consequently, too low a rutile yield is obtained.

### Example 11

A 50 kW RF ICP according to Example 5 is used. However, the plasma gas is substituted for argon/ammonia, with 12 Nm³/h argon and 3 Nm³/h ammonia. Titanium chloride is injected in the plasma, at rate of 1 1/h, resulting in an average temperature above 2000 K. By analogy with the above examples, the titanium chloride is totally vaporized, whereupon it readily nucleates, forming a cubic TiN nano-powder. Subsequently, a nitrogen flow of 5 Nm³/h is used as a quench gas. Further downstream, 10 Nm³/h of air is blown, thereby oxidizing the powder and producing nano-sized rutile TiO₂. After filtering, nano-sized TiO₂ powder is obtained, having a rutile content of 95 ± 5 % and a specific surface area of 25 ± 4 m²/g.

**Table 1: Experimental conditions for the production of nano-sized manganese doped TiO₂ using ICP**

| **Conditions** | **Example 1** | **Example 5** | **Example 6** | **Example 7** | **Example 8** | **Example 9** | **Example 10** | **Example 11** |
|---|---|---|---|---|---|---|---|---|
| Plasma gas | Ar/N₂ | Ar/N₂ | Ar/N₂ | Ar/N₂/O₂ | Ar/N₂/O₂ | Ar/O₂ | Ar/O₂ | Ar/NH₃ |
| Plasma gas flow (Nm³/h) | 12/3 | 12/3 | 12/3 | 12/2.8/0.2 | 12/2.5/0.5 | 12/1 | 12/3 | 12/3 |
| (C₁₂H_{2B}O₄Ti) (1/h) | 1 | 0.5 | 0.5 | 0.5 | 0.5 | 0.5 | 0.5 | 1 (TiCl₄) |
| Carbon/O₂ ratio | >2.2 | >2.2 | >2.2 | 2.2 | 0.9 | 0.45 | 0.15 | - |
| First quench | N₂ | N₂ | N₂ | N₂ | N₂ | N₂ | N₂ | N₂ |
| First quench gas flow (Nm³/h) | 5 | 5 | 5 | 5 | 5 | 5 | 5 | 5 |
| Second quench gases | Air | - | Air | Air | Air | Air | Air | Air |
| Second quench flow (Nm³/h) | 10 | 0 | 10 | 10 | 10 | 10 | 10 | 10 |
| End product | TiO₂ | TiC | TiO₂ | TiO₂ | TiO₂ | TiO₂ | TiO₂ | TiO₂ |
| Specific surface area (m²/g) | 20 | 40 | 22 | 22 | 22 | 23 | 25 | 25 |
| Rutile Ti02 content (wt%) | 97 | - | 97 | 95 | 90 | 50 | 35 | 95 |

## Claims

1. A process for the production of a nano-sized rutile powder comprising the steps of providing a hot gas stream and of introducing therein, firstly:
- a titanium-bearing first reactant; and
- a carbon- and/or nitrogen-bearing second reactant;
the temperature of said gas stream being chosen so as to vaporize said first and second reactants, these reactants being selected so as to form, at the prevalent temperature, titanium carbide, titanium nitride or a mixture thereof, as a nano-sized precursor; and, thereafter:
- a volatile oxygen-bearing reactant selected so as to react with the nano-sized precursor, converting it to nano-sized titanium dioxide powder having a rutile content of at least 50%.

2. Process according to claim 1, wherein, before the step of introducing an oxygen-bearing reactant, the gas stream is quenched.

3. Process according to any one of claims 1 to 2, wherein, after the step of introducing an oxygen-bearing reactant, the hot gas stream is quenched.

4. Process according to any one of claims 1 to 3, whereby the hot gas stream is generated by means of either one of a gas burner, a hot-wall reactor, an RF plasma, and a DC arc plasma.

5. Process according to any one of claims 1 to 4, wherein the titanium-bearing first reactant comprises either one or more of a titanium chloride, an oxide, a sulphate, and an organo-metallic titanium compound.

6. Process according to any one of claims 1 to 5, wherein the carbon- and/or nitrogen-bearing second reactant comprises either one or more of carbon, carbonate, carbon monoxide, carbon dioxide, hydro-carbons, nitrogen, amines and nitrous oxide.

7. Process according to any one of claims 1 to 6, wherein the oxygen-bearing reactant comprises air, oxygen, carbon dioxide or nitric oxide.

8. A process according to any one of claims 1 to 7, wherein the titanium-bearing first reactant and the carbon- and/or nitrogen-bearing second reactant are introduced simultaneously in the hot gas stream.

9. A process according to claim 8, wherein the titanium-bearing first reactant and the carbon- and/or nitrogen-bearing second reactant are embodied as a single compound.

10. Process according to claims 9, wherein said single compound is titanium isopropoxide.

11. Process according to any one of claims 1 to 10, wherein the oxygen-bearing reactant is air.

12. Process according to any one of claims 1 to 11, wherein an additional volatile metal-bearing compound is introduced in the hot gas stream, together with the firstly introduced reactants, thereby forming a metal-doped rutile.

13. Process according to claim 12, wherein said additional metal-bearing compound contains manganese, preferably as an organic compound.

14. Process according to claims 13, wherein the amount of said additional manganese-bearing compound is adjusted so as to obtain a doping level of between 0.01 and 30 wt% in the rutile.

## Patentansprüche

1. Verfahren zur Herstellung eines nanoskaligen Rutilpulvers, bei dem man einen heißen Gasstrom bereitstellt und in diesen zunächst:
- einen titanhaltigen ersten Reaktanten und
- einen kohlenstoff- oder stickstoffhaltigen zweiten Reaktanten,
wobei man die Temperatur des Gasstroms so wählt, daß der erste Reaktant und der zweite Reaktant verdampfen, wobei man diese Reaktanten so wählt, daß bei der vorherrschenden Temperatur Titancarbid, Titannitrid oder ein Gemisch davon als nanoskaliger Vorläufer gebildet wird; und danach
- einen flüchtigen sauerstoffhaltigen Reaktanten, den man so wählt, daß er mit dem nanoskaligen Vorläufer reagiert, einträgt, wobei dieser in nanoskaliges Titandioxidpulver mit einem Rutilgehalt von mindestens 50% umgewandelt wird.

2. Verfahren nach Anspruch 1, bei dem man vor dem Schritt des Eintragens eines sauerstoffhaltigen Reaktanten den Gasstrom quencht.

3. Verfahren nach Anspruch 1 oder 2, bei dem man nach dem Schritt des Eintragens eines sauerstoffhaltigen Reaktanten den heißen Gasstrom quencht.

4. Verfahren nach einem der Ansprüche 1 bis 3, bei dem man den heißen Gasstrom mit Hilfe eines Gasbrenners, eines Heißwandreaktors, eines HF-Plasmas oder eines Gleichstrom-Lichtbogenplasmas erzeugt.

5. Verfahren nach einem der Ansprüche 1 bis 4, bei dem der titanhaltige erste Reaktant ein Titanchlorid, ein Oxid, ein Sulfat und/oder eine metallorganische Titanverbindung umfaßt.

6. Verfahren nach einem der Ansprüche 1 bis 5, bei dem der kohlenstoff- und/oder stickstoffhaltige zweite Reaktant Kohlenstoff, Carbonat, Kohlenmonoxid, Kohlendioxid, Kohlenwasserstoffe, Stickstoff, Amine und/oder Distickstoffmonoxid umfaßt.

7. Verfahren nach einem der Ansprüche 1 bis 6, bei dem der sauerstoffhaltige Reaktant Luft, Sauerstoff, Kohlendioxid oder Stickstoffmonoxid umfaßt.

8. Verfahren nach einem der Ansprüche 1 bis 7, bei dem man den titanhaltigen ersten Reaktanten und den kohlenstoff- und/oder stickstoffhaltigen zweiten Reaktanten gleichzeitig in den heißen Gasstrom einträgt.

9. Verfahren nach Anspruch 8, bei dem der titanhaltige erste Reaktant und der kohlenstoff- und/oder stickstoffhaltige zweite Reaktant als eine einzige Verbindung ausgeführt sind.

10. Verfahren nach Anspruch 9, bei dem es sich bei der einzigen Verbindung um Titanisopropoxid handelt.

11. Verfahren nach einem der Ansprüche 1 bis 10, bei dem es sich bei dem sauerstoffhaltigen Reaktanten um Luft handelt.

12. Verfahren nach einem der Ansprüche 1 bis 11, bei dem man in den heißen Gasstrom zusammen mit den zunächst eingetragenen Reaktanten eine zusätzliche flüchtige metallhaltige Verbindung einträgt, wodurch ein metalldotiertes Rutil gebildet wird.

13. Verfahren nach Anspruch 12, bei dem die zusätzliche metallhaltige Verbindung Mangan enthält, vorzugsweise als organische Verbindung.

14. Verfahren nach Anspruch 13, bei dem man die Menge der zusätzlichen manganhaltigen Verbindung so einstellt, daß man ein Dotierungsniveau zwischen 0,01 und 30 Gew.-% in dem Rutil erhält.

## Revendications

1. Procédé de fabrication d'une poudre de rutile nanométrique, comprenant les étapes de mise à disposition d'un courant gazeux chaud et d'introduction dans celui-ci, tout d'abord :
- d'un premier réactif portant du titane ; et
- d'un second réactif portant du carbone et/ou de l'azote ;
la température dudit courant gazeux étant choisie de manière à vaporiser lesdits premier et second réactifs, ces réactifs étant choisis de manière à former, à la température qui prévaut, du carbure de silicium, du nitrure de silicium ou un de leurs mélanges, en tant que précurseur nanométrique ; puis
d'un réactif volatil portant de l'oxygène choisi de manière à réagir avec le précurseur nanométrique pour le transformer en une poudre de dioxyde de titane nanométrique ayant une teneur en rutile d'au moins 50 %.

2. Procédé selon la revendication 1, dans lequel le courant gazeux est refroidi avant l'étape d'introduction d'un réactif portant de l'oxygène.

3. Procédé selon l'une quelconque des revendications 1 à 2, dans lequel le courant gazeux chaud est refroidi après l'étape d'introduction d'un réactif portant de l'oxygène.

4. Procédé selon l'une quelconque des revendications 1 à 3, dans lequel le courant gazeux chaud est généré par un brûleur à gaz, un réacteur à paroi chaude, un plasma RF ou un plasma d'arc DC.

5. Procédé selon l'une quelconque des revendications 1 à 4, dans lequel le premier réactif portant du titane comprend du chlorure de titane et/ou un oxyde et/ou un sulfate et/ou un composé de titane organométallique.

6. Procédé selon l'une quelconque des revendications 1 à 5, dans lequel le second réactif portant du carbone et/ou de l'azote comprend du carbone et/ou un carbonate et/ou du monoxyde de carbone et/ou du dioxyde de carbone et/ou des hydrocarbures et/ou de l'azote et/ou des amines et/ou de l'oxyde nitreux.

7. Procédé selon l'une quelconque des revendications 1 à 6, dans lequel le réactif portant de l'oxygène comprend de l'air, de l'oxygène, du dioxyde de carbone ou de l'oxyde nitrique.

8. Procédé selon l'une quelconque des revendications 1 à 7, dans lequel le premier réactif portant du titane et le second réactif portant du carbone et/ou de l'azote sont introduits simultanément dans le courant gazeux chaud.

9. Procédé selon la revendication 8, dans lequel le premier réactif portant du titane et le second réactif portant du carbone et/ou de l'azote sont regroupés dans un seul composé.

10. Procédé selon la revendication 9, dans lequel ledit composé est l'isopropoxyde de titane.

11. Procédé selon l'une quelconque des revendications 1 à 10, dans lequel le réactif portant de l'oxygène est l'air.

12. Procédé selon l'une quelconque des revendications 1 à 11, dans lequel un composé volatil portant un métal supplémentaire est introduit dans le courant gazeux chaud, conjointement avec les réactifs introduits en premier, afin de former un rutile dopé par un métal.

13. Procédé selon la revendication 12, dans lequel ledit composé portant un métal supplémentaire contient du manganèse, de préférence sous la forme d'un composé organique.

14. Procédé selon la revendication 13, dans lequel la quantité dudit composé portant du manganèse supplémentaire est ajustée de manière à obtenir un niveau de dopage compris entre 0,01 et 30 % en poids dans le rutile.
